# EUROPEAN PATENT SPECIFICATION

(11) **EP 3 135 957 B1**
(45) Date of publication and mention of the grant of the patent: **29.04.2020**
(21) Application number: 15306316.9
(22) Date of filing: 26.08.2015
(51) Int. Cl.: F16H 7/20, F16C 13/00, F16H 55/36

(54) **PULLEY DEVICE WITH RETAINING PLUG**
RIEMENSCHEIBENVORRICHTUNG MIT HALTESTOPFEN
DISPOSITIF DE POULIE AVEC BOUCHON DE RETENUE

(43) Date of publication of application: 01.03.2017
(73) Proprietor: Aktiebolaget SKF, 415 50 Göteborg (SE)
(72) Inventor: CAPOLDI, Daniel, 37540 SAINT CYR SUR LOIRE (FR); CHERIOUX, Laurent, 37100 TOURS (FR); BORDIER, Frédéric, 37360 NEUILLE PONT (FR)
(74) Representative: Kuhstrebe, Jochen

(56) References cited:
- EP-A1- 0 022 681
- WO-A1-2010/113195
- DE-A1-102006 019 538
- GB-A- 2 258 287
- US-A- 4 010 987

## Description

The present invention relates to the field of pulley devices for tensioning idlers or runner rollers or automatic tensioners designed to interact with a chain or a belt, for example a distribution belt of an internal combustion engine of a vehicle.

Such rollers are usually used to keep a constant tension on the belt or the chain in a determined range or to locally modify the path taken by the latter. These are called respectively tensioning idlers or runner rollers. In runner rollers, the pulley is mounted so as to rotate on a screw or a spindle by means of a rolling bearing, the roller then being attached directly or indirectly to the engine block or to an element of a tensioning idler device, for example an articulated arm or an eccentric.

A pulley device is supplied to a car manufacturer with its screw and often with sealing shields to protect said device against the intrusion of foreign particles from the outside environment. The pulley device generally comprises a friction ring cooperating with the screw to form a unitary assembly for transport.

However, for the vehicle service market segment which supplies aftermarket parts for cars, the pulley device is not delivered with a screw. Such a pulley device is not supplied as a unitary assembly.

Such pulley devices are known from US 4 010 987 A, EP 0 022 681 A1, DE 10 2006 019538 A1 or GB 2 258 287 A.

One aim of the present invention is to overcome this drawback.

It is a particular object of the present invention to provide a unitary pulley device for vehicle service market segment.

In one embodiment, the pulley device for belt or chain tensioning idler or runner roller comprises the features of claim 1.

The pulley device constitutes a unitary assembly that can be handled and transported. A single element enables to achieve a dual function, namely to support the bearing as well as the two shields, and to retain said shields relative to the bearing. The axial retention of the plug with respect to the bearing is obtained by fitting. An interference fit may be provided.

The shields may be mounted in axial contact with the bearing.

Preferably, the first retaining means may axially bear against the associated shield axially on the side opposite to the bearing to axially retain said shield by axial pinching. The second retaining means may radially come into contact with the bore of the associated shield to axially retain said shield by radial wedging.

In one embodiment, the retaining plug is provided with a first large-diameter portion comprising the first retaining means and with a second large-diameter portion comprising the second retaining means. The second large-diameter portion may extend from the first large-diameter portion.

In one embodiment, the second retaining means may comprise a plurality of ribs protruding radially outwards and spaced apart one with another in the circumferential direction.

Preferably, the retaining plug comprises error prevention means for proper installation of said device on an associated engine. The error prevention means may be marked on the retaining plug and/or provided on a flange of said plug.

Advantageously, the retaining plug is made in one part. The plug may be made from plastic material.

In one embodiment, the bearing comprises an inner ring, an outer ring and at least one row of rolling elements disposed into a radial space existing between said rings, the shields being located outside from said radial space.

The present invention and its advantages will be better understood by studying the detailed description of a specific embodiment given by way of non-limiting example and illustrated by the appended drawings on which:
- Figure 1 is a cross-section of a pulley device according to an example of the invention, and
- Figures 2 and 3 are exploded perspective views of a retaining plug of the device of Figure 1.

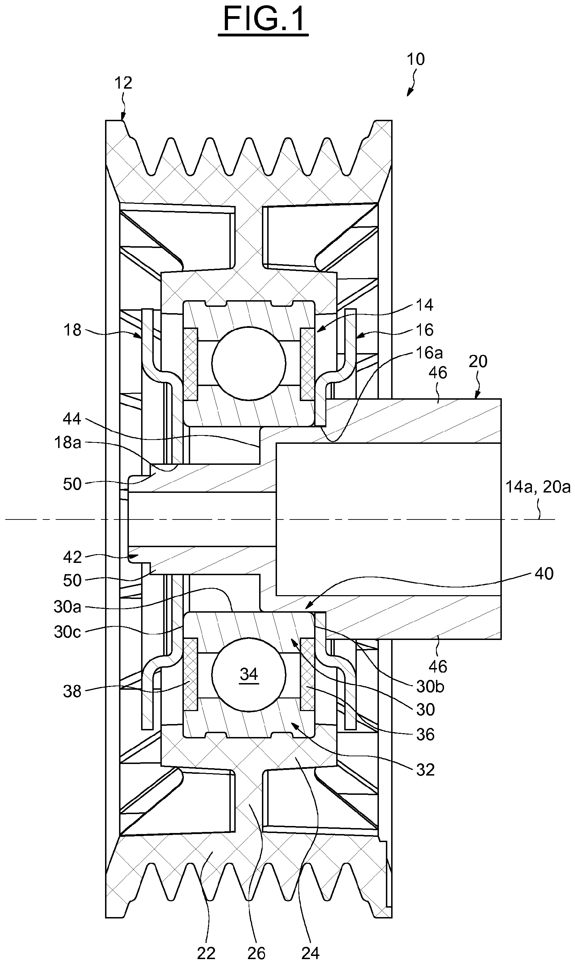

As shown on Figure 1, a pulley device 10 comprises a pulley 12 adapted to interact with a belt or a chain (not shown), a rolling bearing 14 supporting the pulley, with a geometric axis 14a, and first and second sealing end-plates or shields 16, 18 disposed axially on either side of the rolling bearing. As will be described later, the device 10 further comprises on single retaining plug 20 onto which are mounted the rolling bearing 14 and the shields 16, 18 and adapted to axially retain on said plug each of the shields relative to the bearing.

The pulley 12 comprises an axial annular outer portion 22 providing an outer surface designed to interact with a belt or a chain, an axial annular inner portion 24, and a radial annular intermediate portion 26 connecting said outer and inner portions. The portions 22, 24 are concentric and coaxial with the axis 14a. Ribs (not referenced) are also provided between the outer and inner portions 22, 26.

The rolling bearing 14 comprises an inner ring 30, an outer ring 32 onto which is mounted the pulley 12, and a row of rolling elements 34, which in this case are balls, radially disposed between said rings. The rolling bearing 14 further comprises on each side an annular seal 36, 38 to close the radial space that exists between the rings 30, 32 and inside which are located the rolling elements 34. The seals 36, 38 are mounted radially between the inner and outer rings 30, 32. The seals are illustrated schematically on Figure 1.

The inner ring 30 comprises an outer cylindrical surface (not referenced) onto which is formed a toroidal circular raceway for the rolling elements 34. The inner ring 30 also comprises a cylindrical bore 30a and two radial surfaces 30b, 30c which axially delimit said bore and the outer surface. The bore 30a forms the bore of the rolling bearing. The inner ring 32 has a similar design. In the illustrated example, the inner and outer rings 30, 32 are of the solid type. In the illustrated example, the pulley 12 is obtained by overmoulding a plastic material, such as a polyamide, on the outer ring 32. This leads to an excellent cohesion between these parts. Alternatively, the pulley 12 may be glued onto the outer ring 12 or be made of metal sheet and fitted onto said ring. In another variant, the pulley 12 and the outer ring 12 may be formed in one part.

Each sealing shield 16, 18 is made in one part and may be advantageously manufactured in an economic way by cutting, stamping and folding a metal sheet. Alternatively, the shields 16, 18 may be formed from another metallic material such as copper or aluminium or from an alloy such as brass. Alternatively, the shields 16, 18 may be made from synthetic material like polyamide.

Each shield 16, 18 is arranged laterally to the rolling bearing 14. Each shield 16, 18 is located outside from the radial space that exists between the inner and outer rings 30, 32. Each shield 16, 18 is located outside from the bore 30a of the rolling bearing. Each shield 16, 18 is mounted axially into contact against the inner ring 30. The shield 16 axially bears against the radial surface 30b of the inner ring while the shield 18 axially comes into contact with the opposite radial surface 30c of the said ring. Each shield 16, 18 has an annular cup form. Each shield 16, 18 has a cylindrical bore 16a, 18a coaxial with the axis 14a of the rolling bearing. In the illustrated example, the diameter of the bore 16a is larger than the one of the bore 18a.

Each shield 16, 18 extends radially outwards. In the illustrated example, each shield 16, 18 extends radially towards the pulley 12 to define with said pulley a labyrinth passage in order to reduce the intrusion of contaminants. The outer free edge of each shield 16, 18 defines with the inner portion 24 of the pulley the labyrinth passage. Alternatively, each shield 16, 18 may extend radially towards the outer ring 32 to define with said ring the labyrinth passage.

The retaining plug 20 is distinct from the sealing shields 16, 18. The retaining plug 20 is made in one part. The plug 20 may be made from synthetic material by moulding. The plug 20 extends along an axis 20a which is coaxial with the axis 14a of the rolling bearing. In the illustrate example, the plug 20 is provided with an axial through-hole (not referenced). Accordingly, a weight reduction is obtained. Alternatively, the plug 20 may be deprived of such hole.

The plug 20 is mounted into the bore 30a of the rolling bearing and into the bore 16a, 18a of each shield. The plug 20 supports the rolling bearing 14 and the shields 16, 18. The plug 20 is fitted into the bore 30a of the rolling bearing. The plug 20 is centred in said bore 30a and the bores 16a, 18a of the shields. The plug 20 is not permanently secured to the rolling bearing 14 and the shields 16, 18. As will be described later, the plug 20 may be removed by an operator from the rolling bearing 14 and the shields 16, 18.

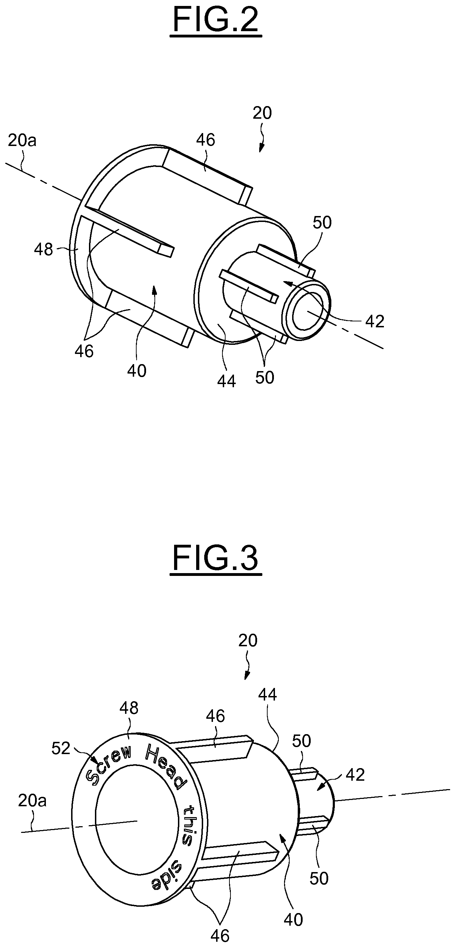

As shown more clearly on Figures 2 and 3, the plug 20 comprises a first cylindrical portion 40 having a large diameter and a second cylindrical portion 42 having a small diameter extending form said first portion. An annular radial shoulder 44 is delimited between the first and second portions 40, 42.

The plug 20 also comprises a first group of radial ribs 46 formed on the outer surface of the first portion 40. The ribs 46 extend axially along said outer surface. The ribs 46 leave entirely free a part of the outer surface of the first portion 40 axially located on the side of the second potion 42. The ribs 46 protrude radially outwards. The ribs 46 are spaced apart with one another in the circumferential direction. In the illustrated example, an annular flange 48 is formed on the outer surface of the first portion 40 at an end of said portion which is axially opposite to the second portion 42. The ribs 46 extend axially from the flange 48.

The plug 20 further comprises a second group of radial ribs 50 formed on the outer surface of the second portion 42. The ribs 50 extend axially along said outer surface. The ribs 50 protrude radially outwards. The ribs 50 are spaced apart with one another in the circumferential direction. In the illustrated example, the ribs 50 extend from the radial shoulder 44.

Referring once again to Figure 1, the first portion 40 of the plug is mounted into the bore 30a of the rolling bearing and into the bore 16a of the first shield while the second portion 42 is mounted into said bore 30a and into the bore 18a of the second shield.

The rolling bearing 14 and the first shield 16 are mounted on the first portion 40 of the plug. The bore 30a of the bearing is mounted in radial contact with the outer surface of the first portion 40. A small radial gap is here provided between the bore 16a of the first shield and said outer surface. The ribs 46 of the plug axially bear on the first shield 16 on the side opposite to the rolling bearing 14. The ribs 46 come into contact with the outer surface of the shield 16. The shield 16 is axially disposed between the ribs 46 and the inner ring 30 of the rolling bearing. The shield 16 is in axial contact against the inner ring 30 on one side and in axial contact with the ribs 46 on the other side. The shield 16 is blocked by axial pinching between the ribs 46 and the rolling bearing 14. The ribs 46 form retaining means of the shield 16 on the plug 20.

The second shield 18 is mounted on the second portion 42 of the plug. The bore 18a of the second shield is mounted in radial contact with the ribs 50. The ribs 50 radially come into contact with the bore 18a of the second shield. The shield 18 is axially maintained on the plug 20 by radial wedging. The shield 18 is fitted on the ribs 50. The ribs 50 form retaining means of the shield 18 on the plug 20.

Referring once again to Figure 3, the plug 20 comprises error prevention means 52 for proper installation of the device 10 on an associated engine (not shown). These means 52 are marked on the flange 48 of the plug axially on the side opposite to the second portion 42. These means 52 comprises the indication "Head Screw this side" in order that the operator may easily determine how to mount the pulley device 10 relative to the engine. To this end, the operator firstly removes the retaining plug 20 from the rolling bearing 14 and the shields 16, 18 while maintaining said bearing and shields. Then, the operator manually mounts a screw (not shown) inside the bores of the rolling bearing 14 and the shields 16, 18. Finally, the screw is tightened for fixing the pulley device 10on the engine.

In the illustrated example, the second retaining means of the plug comprise a plurality of radial ribs 50 radially bearing against the shield 18. Alternatively, the ribs 50 may be replaced by an annular portion radially coming into contact with the bore of the shield 18. However, with a plurality of spaced ribs, a weight reduction for the plug 20 is obtained.

The invention has been illustrated on the basis of a pulley device comprising a rolling bearing provided with at least one row of rolling elements radially disposed between the inner and outer rings. Alternatively, the bearing may be a sliding bearing comprising one or two rings.

## Claims

1. Pulley device for belt or chain tensioning idler or runner roller or automatic tensioner comprising a bearing (14), a pulley (12) mounted on the bearing and two shields (16, 18) disposed axially on either side of said bearing, the pulley further comprising one retaining plug (20) mounted into a bore (30a) of the bearing and a bore (16a, 18a) of each shield, the retaining plug (20) being fitted at least in said bore of the bearing and cooperating by contact with the shields (16, 18) to retain said shields on said plug, the retaining plug comprising first and second retaining means (46, 50) each cooperating with one of the shields (16, 18), **characterized in that** the first retaining means of said plug comprise a plurality of ribs (46) protruding radially outwards and spaced apart one with another in the circumferential direction.

2. Device according to claim 1, wherein the shields (16, 18) are mounted in axial contact with the bearing (14).

3. Device according to claim 1 or 2, wherein the first retaining means (46) of said plug axially bear against the associated shield (16) on the side opposite to the bearing to axially retain said shield by axial pinching.

4. Device according to any of the preceding claims, wherein the second retaining means (50) of said plug radially come into contact with the bore (18a) of the associated shield to axially retain said shield by radial wedging.

5. Device according to any of the preceding claims, wherein the retaining plug (20) is provided with a first large-diameter portion (40) comprising the first retaining means, and with a second large-diameter portion (42) comprising the second retaining means.

6. Device according to claim 5, wherein the second large-diameter portion (42) extends from the first large-diameter portion (40).

7. Device according to any of the preceding claims, wherein the second retaining means of said plug comprise a plurality of ribs (50) protruding radially outwards and spaced apart one with another in the circumferential direction.

8. Device according to any of the preceding claims, wherein the retaining plug comprises error prevention means (52) for proper installation of said device on an associated engine.

9. Device according to claim 8, wherein the error prevention means (52) are marked on the retaining plug.

10. Device according to claim 8 or 9, wherein the retaining plug comprises a flange (48) provided with the error prevention means.

11. Device according to any of the preceding claims, wherein the retaining plug (20) is made in one part.

12. Device according to any of the preceding claims, wherein the retaining plug (20) is made from plastic material.

13. Device according to any of the preceding claims, wherein the bearing (14) comprises an inner ring (30), an outer ring (32) and at least one row of rolling elements (34) disposed into a radial space existing between said rings, the shields (16, 18) being located outside from said radial space

## Patentansprüche

1. Riemenscheibenvorrichtung für einen Riemen- oder Kettenspannroller oder eine Laufrolle oder eine automatische Spannvorrichtung, umfassend ein Lager (14), eine an dem Lager befestigte Riemenscheibe (12) und zwei Abschirmungen (16, 18), die axial auf jeder Seite des Lagers angeordnet sind, wobei die Riemenscheibe ferner einen Haltestopfen (20) umfasst, der in einer Bohrung (30a) des Lagers und einer Bohrung (16a, 18a) jeder Abschirmung befestigt ist, wobei der Haltestopfen (20) wenigstens in der Bohrung des Lagers eingepasst ist und über Kontakt mit den Abschirmungen (16, 18) zusammenwirkt, um die Abschirmungen an dem Stopfen zu halten, wobei der Haltestopfen erste und zweite Haltemittel (46, 50) umfasst, die jeweils mit einer der Abschirmungen (16, 18) zusammenwirken, **dadurch gekennzeichnet, dass** die ersten Haltemittel des Stopfens eine Vielzahl von Rippen (46) umfassen, die radial nach außen vorstehen und in der Umfangsrichtung voneinander beabstandet sind.

2. Vorrichtung nach Anspruch 1, wobei die Abschirmungen (16, 18) in axialem Kontakt mit dem Lager (14) befestigt sind.

3. Vorrichtung nach Anspruch 1 oder 2, wobei die ersten Haltemittel (46) des Stopfens axial gegen die zugehörige Abschirmung (16) auf der dem Lager gegenüberliegenden Seite drücken, um die Abschirmung durch axiales Einklemmen axial zu halten.

4. Vorrichtung nach einem der vorhergehenden Ansprüche, wobei die zweiten Haltemittel (50) des Stopfens radial in Kontakt mit der Bohrung (18a) der zugehörigen Abschirmung kommen, um die Abschirmung durch radiales Verkeilen axial zu halten.

5. Vorrichtung nach einem der vorhergehenden Ansprüche, wobei der Haltestopfen (20) mit einem ersten einen großen Durchmesser aufweisenden Abschnitt (40), der die ersten Haltemittel umfasst, und mit einem zweiten einen großen Durchmesser aufweisenden Abschnitt (42), der die zweiten Haltemittel umfasst, versehen ist.

6. Vorrichtung nach Anspruch 5, wobei sich der zweite einen großen Durchmesser aufweisende Abschnitt (42) von dem ersten einen großen Durchmesser aufweisenden Abschnitt (40) erstreckt.

7. Vorrichtung nach einem der vorhergehenden Ansprüche, wobei die zweiten Haltemittel des Stopfens eine Vielzahl von Rippen (50) umfassen, die radial nach außen vorstehen und in der Umfangsrichtung voneinander beabstandet sind.

8. Vorrichtung nach einem der vorhergehenden Ansprüche, wobei der Haltestopfen Fehlerverhinderungsmittel (52) zur richtigen Installation der Vorrichtung an einer zugehörigen Maschine umfasst.

9. Vorrichtung nach Anspruch 8, wobei die Fehlerverhinderungsmittel (52) auf dem Haltestopfen markiert sind.

10. Vorrichtung nach Anspruch 8 oder 9, wobei der Haltestopfen einen Flansch (48) umfasst, der mit den Fehlerverhinderungsmitteln versehen ist.

11. Vorrichtung nach einem der vorhergehenden Ansprüche, wobei der Haltestopfen (20) in einem Stück hergestellt ist.

12. Vorrichtung nach einem der vorhergehenden Ansprüche, wobei der Haltestopfen (20) aus einem Kunststoffmaterial hergestellt ist.

13. Vorrichtung nach einem der vorhergehenden Ansprüche, wobei das Lager (14) einen Innenring (30), einen Außenring (32) und wenigstens eine Reihe von Wälzkörpern (34) umfasst, die in einem zwischen den Ringen bestehenden radialen Raum angeordnet sind, wobei sich die Abschirmungen (16, 18) außerhalb des radialen Raums befinden.

## Revendications

1. Dispositif de poulie pour un rouleau de galet ou de coulisseau tendeur de courroie ou de chaîne ou un tendeur automatique comprenant un palier (14), une poulie (12) montée sur le palier et deux éléments de protection (16, 18) disposés axialement de chaque côté dudit palier, la poulie comprenant en outre un bouchon de retenue (20) monté dans un alésage (30a) du palier et un alésage (16a, 18a) de chaque élément de protection, le bouchon de retenue (20) étant monté au moins dans ledit alésage du palier et coopérant par contact avec les éléments de protection (16, 18) pour retenir lesdits éléments de protection sur ledit bouchon, le bouchon de retenue comprenant des premier et second moyens de retenue (46, 50) coopérant chacun avec l'un des éléments de protection (16, 18), **caractérisé en ce que** les premiers moyens de retenue dudit bouchon comprennent plusieurs nervures (46) faisant saillie radialement vers l'extérieur et espacées les unes des autres dans la direction circonférentielle.

2. Dispositif selon la revendication 1, dans lequel les éléments de protection (16, 18) sont montés en contact axial avec le palier (14).

3. Dispositif selon la revendication 1 ou 2, dans lequel les premiers moyens de retenue (46) dudit bouchon s'appuient axialement contre l'élément de protection associé (16) du côté opposé au palier pour retenir axialement ledit élément de protection par pincement axial.

4. Dispositif selon l'une quelconque des revendications précédentes, dans lequel les seconds moyens de retenue (50) dudit bouchon viennent radialement en contact avec l'alésage (18a) de l'élément de protection associé pour retenir axialement ledit élément de protection par calage radial.

5. Dispositif selon l'une quelconque des revendications précédentes, dans lequel le bouchon de retenue (20) est muni d'une première partie de grand diamètre (40) comprenant les premiers moyens de retenue, et d'une seconde partie de grand diamètre (42) comprenant les seconds moyens de retenue.

6. Dispositif selon la revendication 5, dans lequel la seconde partie de grand diamètre (42) s'étend depuis la première partie de grand diamètre (40).

7. Dispositif selon l'une quelconque des revendications précédentes, dans lequel les seconds moyens de retenue dudit bouchon comprennent une pluralité de nervures (50) faisant saillie radialement vers l'extérieur et espacées les unes des autres dans la direction circonférentielle.

8. Dispositif selon l'une quelconque des revendications précédentes, dans lequel le bouchon de retenue comprend des moyens de prévention d'erreurs (52) pour une installation correcte dudit dispositif sur un moteur associé.

9. Dispositif selon la revendication 8, dans lequel les moyens de prévention d'erreurs (52) sont marqués sur le bouchon de retenue.

10. Dispositif selon la revendication 8 ou 9, dans lequel le bouchon de retenue comprend une bride (48) pourvue des moyens de prévention d'erreurs.

11. Dispositif selon l'une quelconque des revendications précédentes, dans lequel le bouchon de retenue (20) est réalisé en une seule pièce.

12. Dispositif selon l'une des revendications précédentes, dans lequel le bouchon de retenue (20) est réalisé en matière plastique.

13. Dispositif selon l'une quelconque des revendications précédentes, dans lequel le palier (14) comprend une bague intérieure (30), une bague extérieure (32) et au moins une rangée d'éléments roulants (34) disposés dans un espace radial existant entre lesdites bagues, les éléments de protection (16, 18) étant situés en dehors dudit espace radial.
